# EUROPÄISCHE PATENTSCHRIFT

(11) **EP 0 595 129 B1**
(45) Veröffentlichungstag und Bekanntmachung des Hinweises auf die Patenterteilung: **13.12.1995**
(21) Anmeldenummer: 93116677.1
(22) Anmeldetag: 15.10.1993
(51) Int. Cl.: C09D 17/00, C08F 8/00

(54) **Verwendung von Polyacrylsäureestern als Dispergiermittel**
Use of polyacrylates as dispersing agents
Utilisation des esters polymères de l'acide acrylique comme dispersants

(30) Priorität: 28.10.1992 DE 4236337
(43) Veröffentlichungstag der Anmeldung: 04.05.1994
(73) Patentinhaber: Th. Goldschmidt AG, 45127 Essen (DE)
(72) Erfinder: Barkowsky, Michael, Dr., D-45134 Essen (DE); Fock, Jürgen, Dr., D-40470 Düsseldorf (DE); Schaefer, Dietmar, Dr., D-45529 Hattingen (DE)

(56) Entgegenhaltungen:
- EP-A- 0 340 976
- EP-A- 0 373 493
- US-A- 3 980 602

## Beschreibung

Die Erfindung betrifft die Verwendung von in bestimmter Weise erhaltenen Polyacrylsäureestern als Dispergiermittel für feinteilige Feststoffe, insbesondere Füllstoffe und Pigmente, in organischen Medien.

Es ist aus dem Stand der Technik bekannt, Polyacrylsäureester verschiedener Zusammensetzungen als Dispergiermittel zu verwenden. Stellvertretend für die umfangreiche Patentliteratur werden die folgenden Offenlegungs- und Patentschriften benannt:

In der JP-OS 61-145 254 sind anorganische und organische Pigmente beschrieben, deren Oberfläche mit einem Copolymerisat beschichtet ist, welches aus 1 bis 99 % Polyalkylenglykol(meth)acrylat und 1 bis 99 % Alkylmethacrylat, dessen Alkylgruppen 6 bis 22 Kohlenstoffatome aufweisen, besteht. Als Beispiel wird angegeben, Ruß mit 10 Gew.-% eines Copolymerisates aus 25 Teilen Polypropylenglykolmonomethacrylat und 75 Teilen Octadecanylmethacrylat, wobei das Copolymerisat ein Molgewicht von 32 000 aufweist, zu beschichten. Der so behandelte Ruß wird in einer Menge von 0,3 % in ein Polyacetal eingearbeitet. Der Kunststoff zeigt bei der Verarbeitung in einer Spritzgußmaschine verbesserte Eigenschaften bei thermischer Belastung.

Die JP-OS 60-217 271 betrifft kationische Dispergiermittel für wäßrige Pigmentdispersionen. Dabei werden als Dispergiermittel Copolymerisate aus fettsäuremodifizierten (Meth)acrylmonomeren und Aminoalkylmethacrylaten, deren Amingruppen quaterniert sind, verwendet. Beispielsweise werden 113 Teile Stearyl(meth)acrylat, 93 Teile N-Vinylpyrrolidon und 44 Teile N,N-dimethylaminoethyl(meth)acrylat copolymerisiert und mit 1,2-Butylenoxid quaterniert.

In der DE-OS 28 40 637 ist ein Verfahren zur homogenen Beschichtung von Titandioxidpigmenten mit organischen Polymeren beschrieben, wobei eine Dispersion von Titandioxid in Wasser mit einer wäßrigen Lösung eines Carboxylgruppen enthaltenden Polymeren versetzt und das Polymer auf das beschichtete Pigment aufgebracht wird, wobei man als polymere Verbindungen solche der allgemeinen Formel 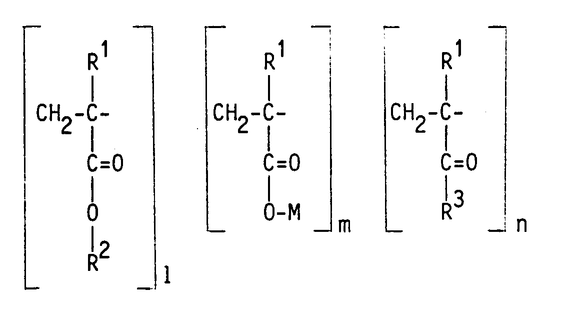
verwendet, wobei
- R¹: unabhängig voneinander Wasserstoff oder Methyl;
- R²: Wasserstoff, Alkyl bzw. Cycloalkyl mit 1 bis 8 C-Atomen;
- M: Natrium-, Kaliumkationen;
- R³: = R² oder vorzugsweise Hydroxyalkyl-, mit 2 bis 6 C-Atomen;
- l: 1 Teil,
- m: 0,2 - 1,5 Teile,
- n: 0 oder 0,1 bis 0,5 der monomeren Mol-Anteile betragen.

Die Verbindungen werden in Mengen von etwa 0,05 bis 2,5 Gew.-%, bezogen auf Titandioxid, in schwach alkalischer wäßriger Lösung der Titandioxidaufschlämmung zugesetzt.

Wie bei der vorgenannten japanischen Offenlegungsschrift handelt es sich auch hier um Polyelektrolyte, die in wäßrigen Systemen eingesetzt werden.

Gleiches gilt für die US-PS 3 980 602, in welcher ein Dispergiermittel auf Basis eines Acrylpolymeren beansprucht wird. Dieses Copolymerisat wird hergestellt durch Copolymerisation von
(1) Styrol, Alkylmethacrylat oder Mischungen hiervon,
(2) Alkylacrylat und
(3) Acryl- oder Methacrylsäure.

Die Copolymerisate werden in wäßriger Dispersion oder Lösung bei einem pH-Wert von 7 bis 10 mit den Pigmenten vermahlen.

Die vorliegende Erfindung befaßt sich mit dem technischen Problem, Dispergiermittel für feinteilige Feststoffe zu finden, welche geeignet sind, die Verteilung dieser Feststoffe, insbesondere feinteiliger Füllstoffe und Pigmente, in organischen Medien, insbesondere in Kunststoffen, zu erleichtern und allgemein deren anwendungstechnische Eigenschaften, wie etwa beim Spritzgießen, zu verbessern. Dabei bedient sich die Erfindung von in bestimmter Weise hergestellten Polyacrylaten vorgegebener Zusammensetzung.

Gegenstand der Erfindung ist deshalb die Verwendung von Polyacrylsäureestern eines mittleren Molekulargewichtes von 1500 bis 20 000, erhältlich durch Umesterung von durch radikalische Polymerisation erhaltenen Polyacrylsäurealkylestern, deren Alkylrest 1 bis 4 Kohlenstoffe aufweist, mit
a) gesättigten oder ungesättigten aliphatischen Alkoholen mit 12 bis 22 Kohlenstoffatomen und
b) gegebenenfalls zusätzlich mit Dialkylaminoalkanolen der allgemeinen Formel HO-R¹-NR²R³, wobei R¹ ein zweiwertiger Alkylenrest mit 2 bis 4 Kohlenstoffatomen ist und R², R³ gleich oder verschieden sind und Alkylreste mit 1 bis 4 Kohlenstoffatomen bedeuten,
wobei das molare Verhältnis der aliphatischen Alkohole a) zu den Dialkylaminoalkanolen b) 1 : 0 bis 1 : 1,5 beträgt,
und die Komponenten a) und b) in solchen Mengen verwendet werden, daß 25 bis zu 70 % der Estergruppen umgeestert werden,
als Dispergiermittel für feinteilige Feststoffe, insbesondere Füllstoffe und Pigmente, in organischen Medien.

Derartige Umesterungsprodukte sind in jüngster Zeit mehrfach beschrieben worden, wie z.B. in der DE-PS 38 42 201 und DE-PS 38 42 202 sowie in den DE-OSen 39 06 702, 40 06 093, 41 23 478, 42 02 187 und 42 24 412. Diese Umesterungsprodukte haben gegenüber den analogen Copolymerisaten wesentliche Vorteile, wie z.B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylaten, deren alkoholische Esterkomponente olefinische Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Bei den erfindungsgemäß zu verwendenden Polyacrylaten werden als Umesterungskomponente a) gesättigte oder ungesättigte Alkohole mit 12 bis 22 Kohlenstoffatomen verwendet. In Frage kommen insbesondere die von den natürlich vorkommenden Fettsäuren durch Hydrierung abgeleiteten gesättigten Fettalkohole, wie Laurylalkohol, Myristylalkohol, Palmitylalkohol, Stearylalkohol oder Behenylalkohol. Von besonderem Interesse sind jedoch die ungesättigten Alkohole, insbesondere Oleylalkohol, bei dessen Verwendung als Umesterungskomponente besonders wirksame Dispergiermittel erhalten werden.

Die Umesterungskomponente b) kann zusätzlich zur Umesterung eingesetzt werden, jedoch ist deren Einsatz fakultativ und nicht zwingend erforderlich. Die zusätzliche Verwendung der Umesterungskomponente b) hängt insbesondere von der Art des zu dispergierenden Feststoffes und/oder von der Art des organischen Mediums ab.

Die Komponente b) entspricht der allgemeinen Formel HO-R¹-NR²R³, wobei die Reste innerhalb der im Patentanspruch gegebenen Definitionen vorzugsweise folgende Bedeutungen haben:
R¹ ist ein zweiwertiger Alkylenrest mit 2 oder 3 Kohlenstoffatomen.
R² und R³ sind Alkylreste mit 1 oder 2 Kohlenstoffatomen.

Als Komponente b) sind die Verbindungen HO-(CH₂)₂-N(CH₃)₂ und HO-(CH₂)₂-N(C₂H₅)₂ besonders bevorzugt.

Das molare Verhältnis der Komponenten a) und b) beträgt 1 : 0 bis 1 : 1,5, wobei aber im allgemeinen ein Verhältnis von 1 : 0 bis 1 : 0,2 bevorzugt ist.

Die Umesterung wird mit solchen Mengen an Komponenten a) und b) durchgeführt, daß ein Umesterungsgrad von 25 bis 70 % erreicht wird. Bevorzugt ist ein Umesterungsgrad von etwa 40 bis 60 %.

Die Umesterung verläuft in aus den obengenannten Patent- und Offenlegungsschriften an sich bekannter Weise bei Temperaturen von etwa 70 bis 140°C in Gegenwart eines Umesterungskatalysators und gegebenenfalls in Gegenwart eines Lösungsmittels.

Die erfindungsgemäß zu verwendenden nichtionischen Dispergiermittel werden in einer Menge von etwa 0,01 bis 10 Gew.-%, vorzugsweise 0,05 bis 6 Gew.-%, bezogen auf den eingesetzten Feststoff, eingesetzt.

Die Dispergiermittel können sowohl direkt auf die zu dispergierenden Feststoffe aufgebracht oder dem organischen Medium zugesetzt werden. Sie können in reiner Form oder als "master batch" in höherer Konzentration in einem organischen Medium verteilt verwendet werden. Es ist selbstverständlich möglich, die erfindungsgemäß zu verwendenden Dispergiermittel zusammen mit weiteren Hilfsstoffen oder anderen Dispergiermitteln, wie z.B. den als Dispergiermittel bekannten Stearaten einzusetzen.

Als Feststoffe kommen mineralische Füllstoffe, wie Talkum, Calciumcarbonat, Dolomit, Glimmer, Wollastonit, Kaolin, sowie mineralische Flammschutzmittel, wie Aluminiumhydroxid oder Magnesiumhydroxid, in Frage. Geeignete Pigmente sind Ruß oder Titandioxid, wobei letzteres auch in feinverteilter Form als UV-Schutz in kosmetischen Formulierungen eingesetzt werden kann. Weitere dispergierbare Feststoffe sind chemische Treibmittel, wie Azodicarbamid oder Mischungen von festen Säuren und Carbonaten.

Die erfindungsgemäß zu verwendenden Dispergiermittel können auch zur Dispergierung von keramischen Materialien in organischen Medien, wie z.B. feinteiliges Aluminiumoxid, Siliciumcarbid oder Siliciumnitrid eingesetzt werden. Es ist ferner möglich, mit diesen erfindungsgemäß zu verwendenden Produkten Metallpulver in organischen Medien zu dispergieren, wie etwa feinteiliges Eisen oder Aluminium oder pulverförmige Seltenerden-Magnet-Legierungen.

Als organische Medien kommen u.a. Polyethylen, Polypropylen, Polystyrol, Polyamide, Polyester, Acrylnitrilbutadien, ABS, Polyvinylchlorid, ungesättigte Polyester, Polyacrylate, Paraffinöle und Dioctylphthalat in Frage.

Insbesondere eignen sich die erfindungsgemäßen Dispergiermittel zur Verbesserung der Verteilung von feinteiligen Feststoffen in Lacken, Bindemitteln, Thermoplasten, Duroplasten und Polymerblends.

In den folgenden Beispielen wird zunächst die nicht beanspruchte Herstellung der erfindungsgemäß zu verwendenden Verbindungen und der Vergleichsverbindungen gezeigt. Es folgen anwendungstechnische Beispiele zum Nachweis der Eigenschaften der erfindungsgemäß zu verwendenden Verbindungen und zum Vergleich mit den Eigenschaften, die mit Produkten des Standes der Technik erzielt werden können.

### 1. Herstellungsbeispiele

### a) Herstellung der für die Umesterung benötigten Polymethylacrylate durch radikalische Polymerisation (nicht erfindungsgemäß)

Eine Lösung von 0,6 g Azodiisobuttersäurenitril und 20 g Dodecylmercaptan in 50 g Toluol und 280 g (ca. 3,25 Mol) Methylacrylat wird innerhalb von 2 Stunden in einen mit 53 g Toluol gefüllten Reaktor gegeben. Das vorgelegte Lösungsmittel hat dabei eine Temperatur von 100°C und befindet sich unter Stickstoffatmosphäre. Danach werden nochmals 0,9 g Azodiisobuttersäurenitril, gelöst in 20 g Methylethylketon, innerhalb von 30 Minuten nachgegeben. Schließlich wird das Reaktionsgemisch noch für 1 Stunde bei einer gleichbleibenden Temperatur von 100°C weiter erwärmt. Es verbleibt eine farblose, viskose Flüssigkeit mit einem Brechungsindex von 1,4802. Aus der gelchromatographischen Untersuchung ergibt sich für das erhaltene Polymerisat ein numerisches Molekulargewicht Mₙ von 1950 und für das Gewichtsmittel des Molekulargewichtes M_{w} 3330. Der Uneinheitlichkeitskoeffizient beträgt demnach 1,71. Der Restmonomergehalt ist < 0,1 %.

### b) Herstellung eines Umesterungsproduktes aus Polymethacrylat, Oleylalkohol und Diethylaminoethanol (erfindungsgemäß)

369,2 g des erhaltenen Polymethylacrylates, gelöst in 100 g Toluol, werden zusammen mit 268,0 g (ca. 1 Mol) Oleylalkohol und 117 g (ca. 1 Mol) Diethanolaminoethanol unter Stickstoff auf 120°C erhitzt. Zunächst werden möglicherweise vorhandene Spuren von Wasser durch azeotrope Destillation entfernt. Danach erfolgt die Zugabe von 3,52 g Isopropyltitanat als Umesterungskatalysator. Das bei der Umesterung entstehende Methanol wird durch Fraktionierung von Toluol getrennt. Innerhalb von 3 bis 4 Stunden werden nochmals 10,56 g Isopropyltitanat in drei gleichen Portionen zugegeben. Die Reaktion ist nach etwa 6 Stunden beendet. Ihr Ende wird durch eine Kopftemperatur von etwa 110°C angezeigt.

Der durch gelchromatographische Untersuchung ermittelte Anteil an Diethylaminoethanol und Oleylalkohol entspricht einem Umsatz von 98,0 bzw. 96,3 % der Theorie. Der im Destillat ermittelte Methanolgehalt entspricht einem Umsatz von 94,6 % der Theorie. Aus der gelchromatographischen Untersuchung ergibt sich für das erhaltene Polymerisat ein numerisches Molekulargewicht Mₙ von 3328 und für das Gewichtsmittel des Molekulargewichtes M_{w} von 8288. Der Uneinheitlichkeitskoeffizient beträgt demnach 2,49.

In der Tabelle 1 werden weitere Beispiele von erfindungsgemäß zu verwendenden Produkten aufgeführt, wobei Art, Molekulargewicht (MG) und Menge des Polyacrylsäurealkylesters, Art und Menge des gesättigten oder ungesättigten längerkettigen Alkanols bzw. des Dialkylaminoalkanols angegeben sind. Darüber hinaus sind die aus dem Restgehalt an Alkanol bzw. Dialkylaminoalkanol ermittelten Umsätze angegeben.

**Tabelle 1**

| Prod. Nr. | Polymerisat | | | Alkanol a) | | | Aminoalkanol b) | | | | |
|---|---|---|---|---|---|---|---|---|---|---|---|
| | Art | MG | M[g] | Art | M[g] | Mol | Art | M[g] | Mol | U1[%] | U2[%] |
| 1 | PMA | 3000 | 369,2 | OLA | 268,0 | 1,0 | DEAE | 117,0 | 1,0 | 96,3 | 98,2 |
| 2 | PMA | 3000 | 369,2 | OLA | 428,8 | 1,6 | DEAE | 46,8 | 0,4 | 95,7 | 97,6 |
| 3 | PMA | 3000 | 369,2 | OLA | 599,0 | 2,1 | - | - | - | 97,5 | - |
| 4 | PMA | 3000 | 369,2 | LAA | 186,0 | 1,0 | DEAE | 117,0 | 1,0 | 98,4 | 97,9 |
| Die Abkürzungen bedeuten: PMA = Polymethacrylat OLA = Oleylalkohol LAA = Laurylalkohol DEAE = Diethylaminoethanol U1/U2 = Umsatz laut GC | | | | | | | | | | | |

### c) Herstellung von Vergleichsprodukten durch Copolymerisation (nicht erfindungsgemäß)

Ein Gemisch von 1,2 g Azodiisobuttersäurenitril und 16,4 g n-Dodecylmercaptan, 113 g (ca. 1,3 Mol) Methylacrylat, 112,9 g (ca. 0,66 Mol) Diethylaminoethylacrylat, 157,9 g (ca. 0,66 Mol) Laurylacrylat und 50 g Toluol wird während eines Zeitraumes von 3 Stunden in einen Reaktor gegeben, der mit 53 g Toluol gefüllt und auf 100°C aufgeheizt ist. Anschließend werden weitere 0,9 g Azodiisobuttersäurenitril, gelöst in 20 g Methylethylketon, im Verlauf von 30 Minuten zugegeben. Nach einer weiteren Stunde Nachreaktionszeit bei 100°C werden schließlich Lösungsmittel und Restmonomere im Vakuum entfernt.

Die gelpermeationschromatographische Untersuchung ergibt ein numerisches Molekulargewichtsmittel Mₙ von 1410 und ein Gewichtsmittel M_{w} von 5630. Der Uneinheitlichkeitskoeffizient beträgt somit 3,98. Der Gehalt an Restmonomeren wird in der Summe zu 7,7 % ermittelt.

Weitere Vergleichspolymere werden wie folgt hergestellt:
Gemäß Beispiel 6 der DE-OS 28 40 637 werden 0,8 g NaHSO₃ (40 %ige wäßrige Lösung) und 1,5 g C₁₈-Alkylsulfonat in 250 ml Wasser vorgegeben. Unter Sauerstoffausschluß wird bei 40°C eine Mischung aus 59,73 g Methacrylsäure und 88,2 g Butylacrylat langsam über einen Zeitraum von 1 bis 2 Stunden zugetropft. Gleichzeitig wird eine Lösung von 0,5 g K₂S₂O₈ in 50 ml Wasser portionsweise während ca. 2 Stunden zugegeben. Nach beendeter Polymerisation wird ein Latex mit einem Festkörpergehalt von 25 % erhalten. Durch Zugabe von verdünnter Natronlauge entsteht eine viskose Lösung.

Gemäß Beispiel 7 der JP-OS 61-145 254 wird eine Lösung von 0,6 g Azodiisobuttersäurenitril und 3,3 g Dodecylmercaptan in 338,0 g (ca. 1,0 Mol) Stearylmethacrylat und 196,0 g (ca. 0,33 Mol) Polypropylenoxidmonomethacrylat innerhalb von 3 Stunden in einen mit 50 g Toluol gefüllten Reaktor gegeben. Das unter Stickstoff stehende Lösungsmittel hat dabei eine Temperatur von 100°C. Nach Beendigung der Zugabe werden nochmals 0,9 g Azodiisobuttersäurenitril, gelöst in 20 g Methylethylketon, während eines Zeitraumes von 2 Stunden nachdosiert. Die Reaktion ist nach 4 Stunden bei einer gleichbleibenden Temperatur von 100°C beendet. Danach wird Toluol durch Destillation bei 90°C und 20 Torr entfernt. Der im Produkt verbleibende Anteil an Stearylmethacrylat und Polypropylenoxidmonomethacrlyat wird durch NMR-spektroskopische Analyse zu 8 bis 10 % ermittelt.

Somit stehen für Vergleichsversuche die in der Tabelle 2 beschriebenen Verbindungen zur Verfügung, wobei aus dem Stand der Technik noch Stearinsäure und Siliconöl zum Vergleich herangezogen werden:

**Tabelle 2**

| Produkt-Nr. | |
|---|---|
| 5 | Zusammensetzung wie Produkt 4, aber durch Copolymerisation hergestellt |
| 6 | Copolymer aus Methacrylsäure und Butylacrylat entsprechend der DE-OS 28 40 637 |
| 7 | Copolymer aus Polyetheracrylat und Stearylmethacrylat entsprechend der JP-OS 61-145 254 |
| 8 | Stearinsäure bzw. Siliconöl |

### 2. Anwendungstechnische Beispiele

Bei der Einarbeitung von Pigmenten und Füllstoffen in Lacke, Farben und Kunststoffe wird vom Verarbeiter erwartet, daß die mit Hilfe der verwendeten Dispergiermittel erhaltenen Produkte allgemein günstige Rheologie-Eigenschaften zeigen. Es wird insbesondere bei hohen Pigment/Füllstoffgehalten eine niedrige Viskosität und eine feinteilige, stabile Dispersion gewünscht.

Zur Überprüfung der Wirksamkeit der erfindungsgemäß zu verwendenden Dispergiermittel wird nach Zwei Methoden vorgegangen:

### Methode I:

Die Pigmente bzw. Füllstoffe werden mit einer Lösung des zu prüfenden Dispergiermittels in Toluol behandelt. Anschließend wird das Toluol abdestilliert und das oberflächenbehandelte Material im Vakuum getrocknet. In einer Ultra-Zentrifugalmühle (im Handel unter der Bezeichnung Typ ZMI von der Firma Retsch GmbH & Co. KG in Haan erhältlich; Siebgröße 0,5 mm) werden die so beschichteten Feststoffe auf jeweils gleiche Agglomeratgröße gemahlen.

Anschließend werden die gemahlenen Feststoffe in Paraffinöl (30 cp) unter Verwendung einer Mizerscheibe (φ = 4 cm) zunächst 2 Minuten mit 2000 UPM (v = 4,25 m/s) und anschließend 3 Minuten mit 4000 UPM (v = 8,5 m/s) dispergiert.

### Methode II:

Die Pigmente bzw. Füllstoffe werden einer vorgegebenen Mischung aus Paraffinöl und Dispergiermittel zugegeben.

Zum Nachweis der Eigenschaften werden die Viskositäten der nach beiden Methoden erhaltenen Dispersionen mit einem Brookfield Spindelviskosimeter (Modell LVT) bei 23°C und einer Drehzahl von 30 UPM mit einer Spindelgröße Nr. 3 bzw. 4 gemessen.

Als Feststoffe werden für die Vergleichsversuche Calciumcarbonat, Titandioxid und Aluminiumhydroxid verwendet. Diese Pigmente werden bei den Versuchen nach Methode I mit unterschiedlichen Mengen Dispergiermittel beschichtet, und zwar

| | |
|---|---|
| Calciumcarbonat | mit 2 Gew.-% Dispergiermittel, |
| Titandioxid | mit 1 Gew.-% Dispergiermittel, |
| Aluminiumhydroxid | mit 1 Gew.-% Dispergiermittel. |

Bei den Versuchen nach der Methode II werden dem Paraffinöl vor dem Einarbeiten des Feststoffes bei Verwendung von

| | |
|---|---|
| Calciumcarbonat | 5,0 Gew.-% Additiv, |
| Titandioxid | 3,0 Gew.-% Additiv, |
| Aluminiumhydroxid | 1,5 Gew.-% Additiv, |

jeweils bezogen auf Feststoff, zugegeben.

In den Tabellen 3, 4 und 5 werden die Viskositäten der mit Feststoff gefüllten Paraffinöldispersionen angegeben.

**Tabelle 3**

| Füllstoff Calciumcarbonat | | |
|---|---|---|
| Prod.-Nr. | Methode I | Methode II |
| | Füllstoffgehalt | |
| | 55 % | 55 % |
| 1 | 760 | 1600 |
| 2 | 600 | 1320 |
| 3 | 480 | 770 |
| 4 | 3200 | 8100 |
| 5 n.e. | 3800 | 10000 |
| 7 n.e. | n.b. | n.b. |
| 8 Stearinsäure n.e. | 6800 | n.b. |
| n.b. = nicht bestimmbar, da Dispersion cremig oder fest n.e. = nicht erfindungsgemäßer Vergleich | | |

**Tabelle 4**

| Füllstoff Titandioxid | | |
|---|---|---|
| Prod.-Nr. | Methode I | Methode II |
| | Füllstoffgehalt | |
| | 40 % | 55 % |
| 1 | 1560 | 630 |
| 2 | 1400 | 460 |
| 3 | 1240 | 360 |
| 4 | 1520 | 6000 |
| 5 n.e. | 2040 | 8400 |
| 6 n.e. | 1900 | n.a. |
| 7 n.e. | 2600 | 3200 |
| 8 Siliconöl n.e. | 2920 | n.b. |
| n.e. = nicht erfindungsgemäßer Vergleich n.b. = nicht bestimmbar, da Dispersion cremig oder fest n.a. = nicht anwendbar, da wäßrige Emulsion | | |

**Tabelle 5**

| Füllstoff Aluminiumhydroxid | | |
|---|---|---|
| Prod.-Nr. | Methode I | Methode II |
| | Füllstoffgehalt | |
| | 65 % | 55 % |
| 1 | 640 | 550 |
| 2 | 500 | 230 |
| 3 | 530 | 250 |
| 4 | 3800 | 3200 |
| 5 n.e. | 4400 | 4000 |
| 7 n.e. | n.b. | n.b. |
| 8 Siliconöl n.e. | n.b. | n.b. |
| n.e. = nicht erfindungsgemäßer Vergleich n.b. = nicht bestimmbar, da Dispersion cremig oder fest | | |

Die Vergleichsversuche zeigen, daß die besten Ergebnisse erzielt werden, wenn die Komponente a) ein ungesättigter Fettalkohol (im Beispiel Oleylalkohol) ist. Diese Produkte lassen sich durch Copolymerisation nicht herstellen und sind nur über das Umesterungsverfahren erhältlich. Darüber hinaus zeigt sich, daß auch dann, wenn die Komponente a) ein gesättigter Alkohol ist, die erfindungsgemäß zu verwendenden Produkte in ihren Eigenschaften den durch Copolymerisation erhaltenen Produkten des Standes der Technik und anderen üblichen Dispergiermitteln überlegen sind.

## Patentansprüche

1. Verwendung von Polyacrylsäureestern eines mittleren Molekulargewichtes von 1500 bis 20 000, erhältlich durch Umesterung von durch radikalische Polymerisation erhaltenen Polyacrylsäurealkylestern, deren Alkylrest 1 bis 4 Kohlenstoffe aufweist, mit
a) gesättigten oder ungesättigten aliphatischen Alkoholen mit 12 bis 22 Kohlenstoffatomen und
b) gegebenenfalls zusätzlich mit Dialkylaminoalkanolen der allgemeinen Formel HO-R¹-NR²R³, wobei R¹ ein zweiwertiger Alkylenrest mit 2 bis 4 Kohlenstoffatomen ist und R², R³ gleich oder verschieden sind und Alkylreste mit 1 bis 4 Kohlenstoffatomen bedeuten,
wobei das molare Verhältnis der aliphatischen Alkohole a) zu den Dialkylaminoalkanolen b) 1 : 0 bis 1 : 1,5 beträgt,
und die Komponenten a) und b) in solchen Mengen verwendet werden, daß 25 bis zu 70 % der Estergruppen umgeestert werden,
als Dispergiermittel für feinteilige Feststoffe, insbesondere Füllstoffe und Pigmente, in organischen Medien.

## Claims

1. Use of polyacrylates having an average molecular weight of 1500 to 20,000 which are obtainable by transesterification of poly(alkyl acrylates) obtained by free-radical polymerization, the alkyl radical of which has 1 to 4 carbon atoms, with
a) saturated or unsaturated aliphatic alcohols having 12 to 22 carbon atoms and
b) if appropriate additionally with dialkylaminoalkanols of the general formula HO-R¹-NR²R³, wherein R¹ is a divalent alkylene radical having 2 to 4 carbon atoms and R² and R³ are identical or different and are alkyl radicals having 1 to 4 carbon atoms,
the molar ratio of the aliphatic alcohols a) to the dialkylaminoalkanols b) being 1 : 0 to 1 : 1.5, and components a) and b) being used in amounts such that 25 to 70 % of the ester groups are transesterified, as dispersing agents for finely divided solids, in particular fillers and pigments, in organic media.

## Revendications

1. Utilisation d'esters polymères de l'acide acrylique, d'un poids moléculaire de 1500 à 20 000, obtenus par transestérification d'esters polymères de l'acide acrylique obtenus par polymérisation radicalaire, dont le résidu alkyle présente 1 à 4 atomes de carbone, avec
a) des alcools aliphatiques saturés ou insaturés avec 12 à 22 atomes de carbone et
b) le cas échéant, en plus, avec des dialkylaminoalcanols de la formule générale HO-R¹-NR²R³, où R¹ est un résidu alkyle divalent avec 2 à 4 atomes de carbone et R², R³ sont identiques ou différents et représentent des résidus alkyle avec 1 à 4 atomes de carbone,
le rapport molaire des alcools aliphatiques a) aux dilakylaminoalcanols b) valant 1:0 à 1:1,5,
et les composants a) et b) étant utilisés en des quantités telles que 25 à 70 % des groupes esters sont transestérifiés,
comme dispersants pour des matières solides finement divisées, en particulier des charges de remplissage et des pigments, dans des milieux organiques.
